# EUROPEAN PATENT APPLICATION

(11) **EP 1 815 955 A1**
(43) Date of publication of application: **08.08.2007**
(21) Application number: 06002433.8
(22) Date of filing: 07.02.2006
(51) Int. Cl.: B27N 3/28, B29C 47/10, C08J 3/205

(54) **Coloured PVC-wood composite**

(71) Applicant: Deceuninck NV, 8830 Hooglede-Gits (BE)
(72) Inventor: Grymonprez, Wim, B-8800 Roeselare (BE)
(74) Representative: Bird, William Edward

(57) **Abstract**

The invention provides a process for making a PVC-wood composite, comprising the following steps:
a) drying wood particles until their water content is below 5%,
b) colouring the dried particles by impregnating them with a colouring material, and
c) combining the thus formed coloured particles with a PVC polymer,

wherein the colouring material comprises an organic dye dissolved in a plasticizer for PVC.

## Description

The invention relates to a process for making a coloured PVC-wood composite comprising the following steps:
a) drying wood particles until the water content is below 5%,
b) colouring the dried particles by impregnating them with a colouring material,
c) combining the thus formed coloured particles with a PVC polymer.

Such a method is known from WO 2005/097444. WO 2005/097444 describes a method of manufacturing a fibrous polymer composite material by compounding an organic fibrous component in particulate form with a mouldable polymeric component to obtain a flowable heated paste which is formed into an artefact which is caused or allowed to set to provide a solid matrix in which the particles of the fibrous component are dispersed, such that prior to the setting of the polymeric component to form the matrix, the step of colouring the fibrous particles by impregnating them with a colouring material.
Typically, the fibrous component comprises wood fibres like sawdust particles, whereas the polymeric component is PVC.
The impregnating of the fibrous particles may be done by contacting them with a colouring liquid and causing or allowing the colouring liquid to enter interconnected cavities and/or passages in the interiors of the fibrous particles via surface pores.
The colouring material or pigment used for the spraying is in liquid form to facilitate impregnation and dispersal thereof in the fibrous particles by spraying.
The fibrous particles may also be coloured by coating them with coatings of colouring material, which coatings, during the compounding, being liquefied sufficiently for the colouring material of the coatings to impregnate and penetrate the porous interiors of the fibrous particles. The coating material will be selected accordingly, to have a sufficiently low viscosity at the compounding temperature for this purpose. The coating, typically being a wax-based coating, contains pigment particles. A disadvantages of such pigmented wax-based coating in the extrusion of a mixture of PVC and such fibrous particles is that the colorant releases from the particles, thus contaminating the extruder.
WO 2005/097444 further describes that various methods, of dying, known in the art and involving chemicals such as mordants and/or other reactive chemicals, may be used to obtain or promote deeper penetration of colouring material into the fibrous particles.

Whether wax based coatings or other chemicals are used to impregnate the porous interiors of the fibrous particles, after combining such particles with PVC, they all cause the impact strength of the resulting composite to decrease.

It is an object of the present invention to provide a method of manufacturing a homogeneously coloured PVC-wood composite without, or at least with a substantially lower decrease of the impact strength than the known method.

This object is achieved in that the colouring material comprises an organic dye dissolved in a plasticizer for PVC.

With a colouring material that comprises an organic dye, dissolved in a plasticizer for PVC an improved impact strength of the PVC-wood composite is combined with an improved impregnation of the porous interior of the fibrous particles.

Another advantage of the use of a plasticizer for PVC is that this allows the use of light coloured dyes. Without being bound to any theory, this could be caused by the fact that during combining the coloured wood particles with the PVC, the plasticizer is absorbed by the PVC, thus leaving the organic dye sufficiently fixed in the wood particles to obtain a homogeneously coloured PVC-wood composite with a light colour.
In this application a PVC/wood composite is considered of a light colour when the colorimetric coordinates, L*, a* et b*, determined in accordance with ISO 7724-1, ISO 7724-2 and ISO 7724-3, using the test method D 65, SCI (specular reflectance included), 8/d or d/8, satisfy the following conditions :L* ≥ 82, -2,5 ≤ a* ≤ 5 and -5 ≤ b* ≤ 15.

Polyvinylchloride (PVC) is typically manufactured by free radical polymerization of vinyl chloride, possibly combined with one or more other vinyl monomers which results in vinyl chloride polymers respectively copolymers hereinafter all denoted as PVC polymers. Such copolymers may be linear, branched, graft, random copolymers or block copolymers. Vinyl monomers that can be combined with vinyl chloride to form such vinyl chloride copolymers include acrylonitrile, α-olefins such as ethylene, propylene or 1-butene, chlorinated monomers such as vinylidene dichloride, acrylic monomers such as acrylic acid, methyl acrylate, ethyl acrylate, methyl methacrylate, acrylamide, hydroxyethyl acrylate and the like, styrenic monomers such as styrene, α-methyl styrene, vinyl toluene and the like, and vinyl acetate. Such monomers may be used in an amount of up to about 50 % by moles, the balance being vinyl chloride. Polymer blends or polymer alloys can also be useful in manufacturing the coloured PVC-wood composites of the invention. Such alloys typically comprise two or more miscible polymers or copolymers suitably blended to form a substantially uniform composition. A polymer alloy at equilibrium preferably comprises a mixture of two or more amorphous polymers existing as a single phase of intimately mixed segments of the two macromolecular components and exhibits a single, composition-dependent, glass transition temperature (Tg).

Polyvinyl chloride forms a number of known polymer alloys that may also be used in the practice of this invention such as but not limited polyvinyl chloride / nitrile rubber, polyvinyl chloride / vinylidene dichloride copolymers, poly(vinyl chloride-co-α-methyl styrene-co-acrylonitrile copolymers, polyvinyl chloride / polyethylene blends and others.

The primary requirement for the substantially thermoplastic polymeric material to be used herein is, that it retains sufficient thermoplastic properties to be able of melt blending with wood particles, and that the resulting melt blend can be extruded or injection-moulded in a process for forming a rigid structural member.
Polyvinyl chloride polymers, copolymers and polymer alloys are commercially available in a wide variety of grades from a number of manufacturers. Preferred polyvinyl chloride materials are polyvinyl chloride polymers with a number average molecular weight Mₙ from about 50,000 to about 150,000, more preferably from 80,000 to 100,000 g/mol.

The polyvinyl chloride material may optionally be modified by the introduction of pending groups being able to form hydrogen bonds with the wood particles. As is well known to those skilled in the art, wood particles contain secondary and/or primary hydroxyl groups that are available for hydrogen bonding. Said pending groups may be introduced by copolymerization of vinyl chloride with a second monomer having functional groups that are capable of forming hydrogen bonds with the wood particles. The polyvinyl chloride polymer material may be modified either by grafting a reactive wood particle-compatible moiety onto the polyvinyl chloride backbone or by incorporating it, e.g. by copolymerization techniques, into the polymer backbone itself. Representative examples of monomers that can be included as one or more minor components (the total amounts of which should be less than 50 % by moles with respect to the whole copolymer) in a polyvinyl chloride copolymer include vinyl alcohol, maleic anhydride, glycidyl methacrylate, vinyl oxazolines, vinyl pyrrolidones, vinyl lactones and the like. Such comonomers, especially when present at the preferred concentrations of less than 10 % by moles, more preferably less than 5 % by moles, react covalently with cellulose hydroxyl groups and form associative bonds therewith, resulting in increased compatibility, but are not sufficiently reacted with vinyl chloride to result in a crosslinked material. The polyvinyl chloride polymer material can be grafted with a variety of reactive compounds preferably having a primary or secondary nitrogen, an oxygen atom, or a carboxyl group, such as but not limited to N-vinyl pyrrolidone, N-vinyl pyridine, N-vinyl pyrimidine, polyvinyl alcohol polymers, unsaturated fatty acids, acrylic acid, methacrylic acid, reactive acrylic oligomers, reactive amines, reactive amides and others. Any reactive or grafting species containing a hydrogen bonding atom is suitable as a graft reagent for this embodiment of the invention.

The polyvinyl chloride, material may also optionally be modified by including one or more impact modifiers, e.g. an impact modifier based on polymethylmethacrylate or another acrylic copolymer, with the purpose of further improving the impact strength. Suitable impact modifiers of this type, as well as the amount to be included into the thermoplastic material, are well known in the art.

After polymerization, PVC used in structural composites is commonly combined with one or more additives such as but not limited to thermal stabilizers, lubricants, fillers, biocides, processing aids, flame retardants and the like.

Plasticizers as solvent for the colouring material are selected from the groups A through J:
A) Phthalates (esters of phthalic acid) Examples of these phthalates are dimethyl, diethyl, dibutyl, dihexyl, di-2-ethylhexyl, di-n-octyl, diisooctyl, diisononyl, diisodecyl, diisotridecyl, dicyclohexyl, di-methylcyclohexyl, dimethyl glycol, dibutyl glycol, benzyl butyl and diphenyl phthalates, and mixtures of phthalates, such as C7 -C9 - and C9 -C11 alkyl phthalates made from predominantly linear alcohols, C6 -C10 -n-alkyl phthalates and C8 - C10-n-alkyl phthalates. Preference is given to dibutyl, dihexyl, di-2-ethylhexyl, di-n-octyl, diisooctyl, diisononyl, diisodecyl, diisotridecyl and benzyl butyl phthalates, and said mixtures of alkyl phthalates. Particular preference is given to di-2-ethylhexyl, diisononyl and diisodecyl phthalate.
B) Esters of aliphatic dicarboxylic acids, in particular of adipic, azelaic and sebacic acids. Examples of these plasticizers are di-2-ethylhexyl adipate, diisooctyladipate (mixture), di-isononyl adipate (mixture), diisodecyl adipate(mixture), benzyl butyl adipate, benzyl octyl adipate, di-2-ethylhexylazelate, di-2-ethylhexyl sebacate and diisodecyl sebacate (mixture). Preference is given to di-2-ethylhexyl adipate and diisooctyl adipate.
C) Esters of trimellitic acid for example tri-2-ethylhexyl trimellitate, triisodecyl trimellitate (mixture), triisotridecyl trimellitate, triisooctyl trimellitate (mixture) and tri-C6 -C8 alkyl, tri-C6 -C10 alkyl, tri-C7 -C9 alkyl- and tri-C9 -C11 alkyl trimellitates. The last-mentioned trimellitates are formed by esterifying trimellitic acid by means of the appropriate alkanol mixtures. Preferred trimellitates are tri-2-ethylhexyl trimellitate and said trimellitates made from alkanol mixtures.
D) Epoxide plasticizers, for example epoxidized soybean oil, linseed oil or octyl oleate.
E) Polymer plasticizers A definition of these plasticizers and examples thereof are given in "Plastics Additives", edited by H. Gachter and H. Muller, Hanser Verlag, 1990, page 393-396, and in "PVC Technology", edited by W. V. Titow, 4th. Ed., Elsevier Publ., 1984, pages 165-170. The most usual starting materials for the preparation of polyester plasticizers are: dicarboxylic acids, such as adipic, phthalic, azelaic and sebacic acids; diols, such as 1,2-propanediol, 1,3-butanediol, 1,4-butanediol, 1,6-hexanediol, neopentyl glycol and diethylene glycol; monocarboxylic acids, such as acetic, caproic, caprylic, lauric, myristic, palmitic, stearic, pelargonic and benzoic acids; monofunctional alcohols, such as isooctanol, 2-ethylhexanol, isodecanol and C7-C9 alkanol and C9 -C11 alkanol mixtures. Particularly advantageous are polyester plasticizers made from said dicarboxylic acids and monofunctional alcohols.
F) Esters of phosphoric acid. A definition of these esters is given in the abovementioned book "Plastics Additives" on pages 390-393. Examples of these phosphates are tributyl phosphate, tri-2-ethylbutyl phosphate, tri-2-ethylhexyl phosphate, trichloroethyl phosphate, 2-ethylhexyl diphenyl phosphate, cresyl diphenyl phosphate, triphenyl phosphate, tricresyl phosphate and trixylenyl phosphate. Preference is given to tri-2-ethylhexyl phosphate and ®Reofos 50.
G) Chlorinated hydrocarbons (paraffins)
H) Hydrocarbons
I) Monoesters, for example butyl oleate, phenoxyethyl oleate, tetrahydrofurfuryl oleate and esters of alkylsulfonic acids.
J) Glycol esters, for example diglycol benzoate, butylphthalyl butyl glycolate, dipropylene glycol dibenzoate or neopentyl glycol dibenzoate. Definitions and examples of plasticizers from groups G) to J) are given in the following handbooks:
   "Plastics Additives", edited by H. Gachter and H. Muller, Hanser Publishers, 1990, pages 403-405 (Group G)), and page 403 (Group H)).
   "PVC Technology", edited by W. V. Titow, 4th. Ed., Elsevier Publishers, 1984, pages 171-173, chapter 6.10.2 (Group G)), page 174, chapter 6.10.5 (Group H)), page 173, chapter 6.10.3 (Group 1)) and pages 173-174, chapter 6.10.4 (Group J)).

Particular preference is given to plasticizers from groups A) to F), in particular A) to D) and F), especially the plasticizers in these groups which have been mentioned as preferred.

Suitable organic dyes for the practice of this invention include, but are not limited to, phtalocyanines and anthraquinone dyes such as alizarines (e.g. alizarin red, alizarin cyanin green, alizarin blue, alizarin orange, acid alizarin violet N) and purpurin, quinoinic dyes such as substituted naphthoquinones, phenoxazines and phenothiazines, carotinoid dyes, chalcone dyes, Victoria blue B, Victoria blue R, indigoid dyes such as indigo blue, indigocarmine and thioindigo, nitro and nitroso dyes such as naphthol green N and naphthol yellow S ; diphenylmethane and triphenylmethane dyes, methine dyes, monoazo dyes and diazo dyes, Acid blue, Acid green, Acid orange, Acid red, Acid violet and Acid yellow. With respect to composite materials intended for outdoor applications, organic dyes are more preferably restricted to those which can withstand ultraviolet (UV) light for a long period of time.

The size of wood particles to be used in the process of the invention is not a critical parameter, provided that it is suitable for hot extrusion under standard conditions. Usually, such wood particles are selected from the group consisting of wood dust with an average particle size from about 25 µm to 250 µm, wood flower with an average particle size from 250 µm to 750 µm, and wood chips with an average particle size from 750 µm to about 2.0 mm.

In a first step of the process of the invention the wood particles are dried until their water content is below 5 % by weight, preferably below 1% by weight, more preferably below 0.1 % by weight, most preferably below 0.05% by weight. This means a significant level of drying is required since, depending upon factors such as relative humidity and season, trees typically have water content between about 10 % and 30 % by weight. Drying in this first step of the process of the invention may be effected by any means known in the art, i.e. with or without the application of vacuum, and using standard drying equipment known to the skilled person.

In a second step of the process of the invention the dried wood particles are impregnated with a colouring material. This can be done by spraying or tumbling or a combination of both. Suitable amounts of a colouring material mainly depend upon the selected organic dye, the desired intensity of colour and upon the aesthetic effect to be provided. Such amounts range from about 0.1 % to 5 % by weight, preferably 0.5 to 3 % by weight, of the PVC-wood composite material.

In a particular embodiment of the invention, the composite may further optionally comprise one or more UV light stabilizers. The latter may be selected according to the knowledge of the skilled person and should be incorporated into the composite in the usual amounts for such additives.

In a third step of the process of the invention, combination of the coloured wood particles and the PVC may be effected by means of extrusion at an elevated temperature between about 160°C and 240°C, preferably between about 170°C and 220°C, more preferably between about 175°C and 210°C. Preferably, the one or more organic dyes should be selected so that they are not subject to deterioration during extrusion at said elevated temperatures.

In another particular embodiment of the process of the invention, dried wood particles represent from about 30 to 60 % by weight, preferably from 35 to 50 % by weight, of the wood-polymer combination being processed, whereas the PVC represents from about 40 to 70 % by weight, preferably from 50 to 65 % by weight, of said PVC-wood composite.

The invention further relates to an article comprising the coloured PVC-wood composite made according to the method of the invention. A particular advantage of an article comprising the composite made according to the invention is that a surface of this article can be brushed to give it a wood like appearance. The improved impregnation of the wood particles warrants a homogeneous surface colour after brushing of the surface without wood coloured speckles caused by insufficiently impregnated wood particle interiors.

## Claims

1. A process for making a PVC-wood composite, comprising the following steps
a) drying wood particles until their water content is below 5%,
b) colouring the dried particles by impregnating them with a colouring material,
c) combining the thus formed coloured particles with a PVC polymer, **characterized in that** the colouring material comprises an organic dye dissolved in a plasticizer for PVC.

2. A process according to claim 1, wherein said wood particles are dried until their water content is below 0.1 % by weight.

3. A process according to claim 2, wherein said polyvinyl chloride further comprises an impact modifier.

4. A process according to claim 3, wherein said impact modifier is based on polymethylmethacrylate or an acrylic copolymer.

5. A process according to any of claims 1 to 4, wherein said one or more plasticizers for said colouring material are selected from the group consisting of dialkylphtalates.

6. A process according to any of claims 1 to 5, wherein said one or more colouring agents are selected from the group consisting of organic dyes with substantial UV-light stability.

7. A process according to any of claims 1 to 6, wherein said wood particles are selected from the group consisting of wood dust with an average particle size from about 25 µm to 250 µm, wood flower with an average particle size from 250 µm to 750 µm, and wood chips with an average particle size from 750 µm to about 2.0 mm.

8. A process according to any of claims 1 to 7, wherein combination of said dried wood particles and said masterbatch is effected by means of extrusion at an elevated temperature between about 160 and 210°C.

9. A process according to claim 8, wherein said organic dye is selected so that it is not subject to deterioration during extrusion at said elevated temperature.

10. A process according to any of the claims 1 to 9, wherein the colorimetric coordinates, L*, a* et b*, of the PVC/wood composite determined in accordance with ISO 7724-1, ISO 7724-2 and ISO 7724-3, using the test method D 65, SCI (specular reflectance included), 8/d or d/8, satisfy the following conditions :L* ≥ 82, -2,5 ≤ a* ≤ 5 and -5 ≤ b* ≤ 15.

11. Article comprising the coloured PVC/wood composite made according to the method of any of the claims 1 through 10.

12. Article according to claim 11, of which at least one surface is brushed.
